# EUROPEAN PATENT SPECIFICATION

(11) **EP 2 787 814 B1**
(45) Date of publication and mention of the grant of the patent: **09.08.2017**
(21) Application number: 12784279.7
(22) Date of filing: 14.11.2012
(51) Int. Cl.: A01N 25/30, A01N 43/50, A01P 13/00

(54) **METHODS OF CONTROLLING UNDESIRABLE VEGETATION WITH IMAZAMOX AND ADJUVANTS IN HERBICIDE RESISTANT CROP PLANTS**
KONTROLLE UNERWÜNSCHTEN PFLANZENWACHSTUMS MIT IMAZAMOX UND ADJUVANTIEN IN HERBIZID-RESISTENTEN NUTZPFLANZEN
CONTRÔLE DE LA VÉGÉTATION INDESIDERABLE AVEC D'IMAZAMOX ET DES ADJUVANTS DANS DES PLANTES UTILES RESISTANTES AUX HERBICIDES

(30) Priority: 05.12.2011 EP 11191969
(43) Date of publication of application: 15.10.2014
(73) Proprietor: BASF Agrochemical Products B.V., 6835 EA Arnhem (NL)
(72) Inventor: SCHNABEL, Gerhard, 63820 Elsenfeld (DE); PFENNING, Matthias, 67365 Schwegenheim (DE); POLZIN, Jörg, 11070 Belgrade (RS); BREMER, Hagen, 67346 Speyer (DE)
(74) Representative: BASF IP Association
(86) International application number: PCT/EP2012/072641
(87) International publication number: WO 2013/083377

(56) References cited:
- EP-A1- 0 933 025
- EP-A2- 0 394 847
- WO-A1-98/35561
- WO-A1-2008/124431
- WO-A2-2007/005581
- WO-A2-2010/036771
- US-A- 5 525 578
- US-A1- 2007 238 618
- "Stalker (Imazapyr iPr-salt) - Material Safety Data Sheet", , 4 January 2008 (2008-01-04), pages 1-8, XP055022815, Retrieved from the Internet: URL:http://transportation.ky.gov/maintenan ce/documents/pesticide/stalker msds.pdf [retrieved on 2012-03-26]
- Matthias Pfenning ET AL: "Improved weed Control in Clearfield-Plus Sunflowers with superior herbicide solutions", 18th International Sunflower Conference, Mar del Plata, Argentina, 27 February 2012 (2012-02-27), pages 1-4, XP55224150, http://www.asagir.org.ar/asagir2008/archiv os_congreso/Improved weed Control in Clearfield-Plus Sunflowers with superior herbicide solutions.doc

## Description

The present invention relates to compositions comprising imazamox and particular adjuvants. The present invention also relates to the use of these compositions for controlling undesirable vegetation, in particular in crops.

### Background of the invention:

In crop protection, it is principally desirable to increase the specificity and the reliability of the action (efficacy) of active compounds. In particular, it is desirable for the crop protection product to control the harmful plants effectively and, at the same time, to be tolerated (crop selectivity) by the useful plants in question.

While imidazolinone herbicides have been successfully employed in weed control in agriculture since their discovery in the 1970s [The Imidazolinone Herbicides, 1991, CRC Press, Inc], there is continued research activity to meet today's demand for highly active, environmentally safe plant protection products.

The imidazolinone compounds imazamethabenz, imazamethabenz-methyl, imazamox, imazapic, imazapyr, imazaquin and imazethapyr are well known in the art, see, for example, The Compendium of Pesticide Common Names (http://www.alanwood.net/pesticides/); Farm Chemicals Handbook 2000, vol. 86, Meister Publishing Company, 2000; B. Hock, C. Fedtke, R.R. Schmidt, Herbizide, Georg Thieme Verlag, Stuttgart 1995;
W.H. Ahrens, Herbicide Handbook, 7th edition, Weed Science Society of America, 1994; and K. K. Hatzios, Herbicide Handbook, Supplement for the 7th edition, Weed Science Society of America, 1998.

WO2007/115944 and its national equivalent US2007/0238618 describe herbicidal mixtures, comprising an imidazolinone herbicide and an adjuvant, where the adjuvant is selected from a partial phosphoric ester or a partial sulfuric ester of a monohydroxy-functional polyalkyl ether. WO98/35561 discloses compositions comprising the herbicide formulation Stalker^{®}, having the isopropylammonium salt of imazapyr as active ingredient, and a surfactant composition comprising polyoxyethylene (9.5) nonylphenol. Compositions comprising imazamox and a) the adjuvants Sponto AD11-1A, Witconol AL69-66 or b) phenylsulfonat CA 100 and Atplus MBA 11/7 are disclosed in EP 0 933 025. Imazapyr and C₁₂/C₁₄-fatty alcohol diethylene glycol ether sulfate (Genapol^{®}LRO) comprising compositions are disclosed in US5,525,578. WO2007/005581 discloses novel sunflower lines, which show less injury after treatment with imazamox or imazapyr in combination with Sun It II, a methylated seed oil, in comparison to other varieties. Similarly, WO2008/124431 describes novel sunflower lines, which are tolerant towards treatment with imazamox or imazapyr in combination with a non-ionic surfactant (Induce 90SC).

WO2010/036771 discloses brassica lines, which are tolerant towards treatment with imazamox in combination with a non-ionic surfactant (Induce 90SC or Merge).

### Summary of the invention:

It is an object of the present invention to provide herbicidal compositions, which show enhanced herbicide action against undesirable harmful plants and/or improved compatibility with crop plants, in particular improved compatibility with imidazolinone tolerant crops, such as sunflower, oil seed rape and rice. The composition should have an improved post-emergence herbicidal activity against harmful plants. In addition, the compositions according to the invention should have a broad spectrum of activity and ultimately help increase the yield.

It was found that compositions comprising imazamox and particular adjuvants are very useful for controlling undesirable vegetation. Surprisingly, the compositions according to the invention have better herbicidal activity, i.e. better activity against undesirable vegetation, than would have been expected based on the herbicidal activity observed for known compositions of imidazolinones and adjuvants.

The present invention relates to herbicidal compositions comprising:
a) a herbicide compound A, which is imazamox; and
b) an adjuvant B, which is b2) an anionic surfactant selected from aliphatic monocarboxylates, aliphatic oligocarboxylates, sulfonamidocarboxylates, aliphatic or aromatic sulfates, polyethersulfates, amidopolyethersulfates, sulfated carboxylates, carbonic acid glycerides, or carbonic esters, aliphatic or aromatic sulfonates, sulfonated carboxylic esters or carboxylic amides, sulfosuccinic acid esters, polyethersulfonates, polyether phosphates or phosphate ester of polyalkoxylated fatty alcohol, polyether sulfate and polyalkoxylated derivatives of compounds of the formula R¹Xₙ, wherein the polyalkoxylate residue is terminated by a residue Y, and wherein R¹ is selected from aliphatic or aromatic residues having at least eight carbon atoms; X is selected from hydroxy, -O-(C₁-C₆-alkyl), -O-(C₃-C₆-alkenyl), amine, amide, or ester; n is 1, 2, 3, 4, 5, or 6; and Y is selected from carboxylate, sulfonate, sulfate, phosphate, or phosphonate; and wherein the weight ratio of the herbicide compound A and the adjuvant B is from 2:1 to 1:60.

The composition of the invention may further comprise a herbicide safener compound C.

The composition of the invention may further comprise a further herbicide compound D, which is different from the herbicide compound A.

The invention furthermore relates to the use of a composition as defined herein for controlling undesirable vegetation in crops and non-crop areas. When using the compositions of the invention for this purpose the herbicide compound A and the adjuvant B and, if present, the herbicide safener component C (as defined hereinafter) and/or the further herbicide compound D (as defined hereinafter) can be applied simultaneously or in succession to the areas, where undesirable vegetation occurs or may occur. A and B and optionally C and/or D are in particular applied in crops, where undesirable vegetation may occur.

The invention furthermore relates to the use of a composition as defined herein for controlling undesirable vegetation in crops which, by genetic engineering or by conventional breeding, are resistant to one or more herbicides or groups of herbicides and/or pathogens such as harmful fungi, and/or to attack by insects; preferably resistant to one or more of the following herbicides: 4-HPPD inhibitor herbicides, one or more of the herbicide compounds D mentioned below, namely against ACCase inhibitors, against inhibitors of photosynthesis, in particular inhibitors of photosynthesis at photosystem II, against inhibitors of protoporphyrinogen-IX-oxidase, against acetolactate synthase (ALS) inhibitors, in particular imidazolinones, against bleacher herbicides or against auxinic herbicides.

The invention furthermore relates to a method for controlling undesirable vegetation, which comprises applying a herbicidal composition according to the present invention to the undesirable plants. Application can be done before, preferably during and/or after, in particular after the emergence of the undesirable plants. The herbicide compound A and the adjuvant B, and, if present, the herbicide safener component C and/or the herbicide compound D can be applied simultaneously or in succession.

The invention in particular relates to a method for controlling undesirable vegetation in crops, which comprises applying a herbicidal composition according to the present invention in crops where undesirable vegetation occurs or might occur.

The invention furthermore relates to a method for controlling undesirable vegetation, which comprises allowing a composition according to the present invention to act on plants, their habitat or on seed.

In the methods of the present invention it is immaterial whether the herbicide compound A, the adjuvant B, a herbicide safener component C and/or the herbicide compound D are formulated and applied jointly or separately. In the case of separate application it is of minor importance, in which order the application takes place. It is only necessary, that the herbicide compound A and the adjuvant B, the herbicide safener compound C and/or the further herbicide compound D are applied in a time frame that allows simultaneous action of the active ingredients on the plants, preferably within a time-frame of at most 14 days, in particular at most 7 days.

In order to allow for timely action of the adjuvant B on the herbicide compound A, A and B are applied within 2 days, preferably within 1 day, more preferably within 1 h, most preferably simultaneously.

The invention also relates to a herbicide formulation, which comprises a herbicidally active composition as defined herein and at least one carrier material, including liquid and/or solid carrier materials.

### Detailed description of the invention

Surprisingly, the compositions according to the present invention have better herbicidal activity or efficacy against harmful plants than would have been expected based on the herbicidal activity observed for known compositions of imidazolinones and adjuvants. In other words, the joint action of an imidazolinone herbicide A and an adjuvant B, results in an enhanced activity against harmful plants in the sense of a synergy effect (potentiation), even at low application rates of the imidazolinone herbicide. For this reason, the compositions can, based on the individual herbicide, be used at lower application rates to achieve a herbicidal effect comparable to the individual herbicide. Alternatively, the compositions can, based on the individual herbicide, provide higher efficacy with the same application rate. Thus, negative carry over effects of the herbicides to follow crops can be reduced or avoided completely.

Moreover, the compositions of the present invention provide good pre- and post-emergence herbicidal activity; in particular, the compositions are useful for combating/controlling harmful plants after their emergence (post-emergence). The compositions of the present invention also show good crop compatibility, i.e. their use in particular crops does not result in increased damage when compared to the known compositions.

As used herein, the terms "controlling" and "combating" are synonyms.

As used herein, the terms "undesirable vegetation", "harmful plants" and "weeds" are synonyms.

Referring to **imidazolinone herbicides** or specific imidazolinone herbicide species in this application shall mean the compounds as mentioned above, as well as their a) salts, e.g. salts of alkaline or earth alkaline metals or ammonium or organoammonium salts, for instance, sodium, potassium, ammonium, preferably isopropyl ammonium etc.; b) respective isomers, e.g. stereo isomers such as the respective enantiomers, in particular the respective R-or S-enantiomers (including salts, ester, amides), c) respective esters, e.g. carboxylic acid C1-C8-(branched or non-branched) alkyl esters, such as methyl esters, ethyl esters, iso propyl esters, d) respective amides, e.g. carboxylic acid amides or carboxylic acid C1-C8-(branched or non-branched) mono- or dialkyl amides, such as dimethyl amides, diethyl amides, diisopropyl amides or e) any other derivative which contains the above imidazolinone structures as structural moiety.

In particular, the term imidazolinone herbicide or reference to specific imidazolinone herbicides herein, such as, imazamox, imazapic, imazapyr, shall include alkylammonium salts, preferably isopropylammonium salts, for example diisopropylammonium- or monoisopropylammonium salts.
According to a preferred embodiment of the invention, the herbicide compound A is a single imidazolinone compound, i.e. imazamox.

Most preferred as the herbicide compound A in the inventive composition is a single imidazolinone compound, i.e. imazamox, particularly R-imazamox.

The **adjuvant B** in the inventive compositions is a surfactant selected from the group b2) anionic surfactants selected from
- aliphatic monocarboxylate, such as fatty acids or sarcosinates,
- aliphatic oligocarboxylates, such as malonate or succinate derivatives,
- sulfonamidocarboxylates,
- aliphatic or aromatic sulfates,
- polyethersulfates,
- amidopolyethersulfates,
- sulfated carboxylates, carbonic acid glycerides, or carbonic esters,
- aliphatic or aromatic sulfonates,
- sulfonated carboxylic esters or carboxylic amides,
- sulfosuccinic acid esters,
- polyethersulfonates,
- polyether phosphates, such as tristyryl polyetherphosphate or phosphate ester of polyalkoxylated fatty alcohol,
- polyether sulfate, such as fatty alcohol polyethersulfate,
- polyalkoxylated derivatives of the formula R¹Xₙ, wherein the polyalkoxylate residue is terminated by a residue Y.

In the polyalkoxylated derivatives of the formula R¹Xₙ, wherein the polyalkoxylate residue is terminated by a residue Y,
R¹ is selected from aliphatic or aromatic residues having at least eight carbon atoms;
X is selected from hydroxy, -O-(C₁-C₆-alkyl), -O-(C₃-C₆-alkenyl), amine, amide, or ester;
n is 1, 2, 3, 4, 5, or 6; and
Y is selected from carboxylate, sulfonate, sulfate, phosphate, or phosphonate.

Glyceryl for example would be propyl (R¹) containing three hydroxy groups (X).
In case X is hydroxy, preferably at least one of the hydroxy groups is polyalkoxylated.

The adjuvant is preferably selected from polyalkoxylated derivatives of the formula R¹Xₙ. Preferred amides are mono- or di-C₁-C₈-alkylamides and mono- or di-C₁-C₈-acylamides, wherein the alkylamides are particularly preferred.

R¹ is preferably selected from aliphatic or aromatic residues having at least 10, more preferably at least 12 carbon atoms. The aromatic residues may contain aliphatic and/or aromatic substitutents. In another form, R¹ is selected from aliphatic or aromatic residues having from 8 to 30, preferably from 10 to 22 and in particular from 12 to 18 carbon atoms.
R¹ is preferably selected from aliphatic residues having at least 10, more preferably at least 12 carbon atoms. The aliphatic residues may be linear or branched, saturated or unsaturated.

Examples for R¹ are: 2,4,6-triisopropylphenyl, polystyrylphenyl, n-octyl, n-decyl, n-undecyl, n-dodecyl, n-tridecyl, n-tetradecyl, n-hexadecyl, n-octadecyl, 2-ethylhexyl, 1-methylnonyl, 2-propylheptyl, 1-methyldecyl, 1-methylundecyl, isotridecyl, n-tetradecenyl, 1-methylpentadecyl, n-hexadecenyl, n-hexadecadienyl, n-octadecenyl, n-octadecadienyl.

The polyalkoxylated derivatives of the formula R¹Xₙ contain a polyalkoxylate residue, which may contain 5 to 50 (preferably 6 to 25 and in particular 6 to 20) equivalents of a C₂-C₆-alkylenoxide. Typically, R¹Xₙ contains one or two polyalkoxylate residues per each residue X, depending on the free valences of X. In case X is hydroxy, said hydroxy group may contain one polyalkoxylate residue per each hydroxy group. In case X is amine, said amine group may contain one or two, preferably two, polyalkoxylate residues per each amine group.
Preferably, the alkyleneoxide is selected from ethylene oxide, propylen oxide, butyleneoxide, and mixtures thereof. In a preferred form, the polyalkoxylated derivatives of the formula R¹Xₙ contain polyethyleneoxide residues, which may contain 6 to 15 equivalents of an ethyleneoxide. Preferred are poly(C₂-C₆ alkoxylate) residues, such as polyethyleneoxide, polypropyleneoxide. The alkyleneoxide units may be in random or block sequence (such as EO-PO-EO). The alkyleneoxide units may further substituted with other functional groups, such as alkyl, acyl, or polyethylene glycol groups. The polyalkoxylate residue may be terminated by hydrogen or any organic group, such as C₁-C₈ alkyl.

In a further embodiment, X may be selected from ethoxylated derivatives of amides, which may contain 1 to 20 equivalents of ethylene oxide.

In a further embodiment, X may be selected from alkoxylated derivatives of esters, wherein the polyalkoxylate residue contains 1 to 50 (preferably 2 to 25 and in particular 5 to 25) equivalents of a C₂-C₄-alkylenoxide.

The anionic surfactant may be present as alkali, alkaline earth, ammonium, or aliphatic amine (e.g. hydroxyethylammonium, trihydroxyethylammonium, tetrahydroxyethylammonium, trihydroxypropylammonium) salts.

Most preferred adjuvants B are selected from:
- polyether phosphates, in particular phosphate ester of polyalkoxylated fatty alcohol;
- polyether sulfate, in particular lauryl alcohol polyethersulfate.

Specific, non-limiting examples for preferred adjuvants B are the following surfactants:
T4 phosphate ester of polyalkoxylated fatty alcohol, commercially available as Klearfac® AA-270 from BASF SE.
T6 lauryl alcohol polyethersulfate containing 10 ethylenoxide equivalents, sodium salt.

From these specific examples, T4, phosphate ester of polyalkoxylated fatty alcohol, is most preferred in the context of the present invention.

According to one embodiment, the compositions of the present invention comprise in addition to the adjuvant B as described above, polysorbates.

According to one embodiment, the compositions of the present invention comprise in addition to the adjuvant B as described above, alkylphenolalkoxylates.

According to one embodiment, the compositions of the present invention comprise in addition to the adjuvant B as described above, polysorbates and alkylphenolalkoxylates.

According to one embodiment, the compositions of the present invention are free of polysorbates and alkylphenolalkoxylates.
The term "free of" within the meaning of this application relates to compositions, which contain less than 3 wt%, preferably less than 1 wt%, especially less than 0,1 wt%, in particular 0,0 wt% polysorbates and alkylphenolalkoxylates.

An example for alkylphenolalkoxylates is nonylphenolethoxylate, which is also known as NPE. Alkylphenolalkoxylates often show adverse endocrinic effects.

Polysorbates are derived from ethoxylated sorbitan esterified with fatty acids. Common brand names for polysorbates include Alkest, Canarcel and Tween. Examples are Polysorbate 20 (Polyoxyethylene (20) sorbitan monolaurate), Polysorbate 40 (Polyoxyethylene (20) sorbitan monopalmitate), Polysorbate 60 (Polyoxyethylene (20) sorbitan monostearate), and Polysorbate 80 (Polyoxyethylene (20) sorbitan monooleate).

In the compositions of the present invention the relative weight ratio of herbicide compound A (as active substance (a.s.)) to the adjuvant B is in the range from 2:1 to 1:60, preferably from 2:1 to 1:40, and more preferably from 1:1 to 1:15. Accordingly, in the methods and uses of the invention, the herbicide compound A and the adjuvant B are preferably applied within these weight ratios.

The optional components C) and D) of the inventive compositions are known in the art, see, for example, The Compendium of Pesticide Common Names (http://www.alanwood.net/pesticides/); Farm Chemicals Handbook 2000 volume 86, Meister Publishing Company, 2000; B. Hock, C. Fedtke, R. R. Schmidt, Herbizide [Herbicides], Georg Thieme Verlag, Stuttgart 1995; W. H. Ahrens, Herbicide Handbook, 7th edition, Weed Science Society of America, 1994; and K. K. Hatzios, Herbicide Handbook, Supplement for the 7th edition, Weed Science Society of America, 1998.

If the compounds mentioned as herbicide compounds D and safeners C have functional groups, which can be ionized, they can also be used in the form of their agriculturally acceptable salts.

In general, the salts of those cations are suitable whose cations have no adverse effect on the action of the active compounds ("agriculturally acceptable").

Preferred cations are the ions of the alkali metals, preferably of lithium, sodium and potassium, of the alkaline earth metals, preferably of calcium and magnesium, and of the transition metals, preferably of manganese, copper, zinc and iron, furthermore ammonium and substituted ammonium (hereinafter also termed as organoammonium) in which one to four hydrogen atoms are replaced by C₁-C₈-alkyl, C₁-C₄-alkyl, hydroxy-C₁-C₄-alkyl, in particular hydroxy-C₂-C₄-alkyl, C₁-C₄-alkoxy-C₁-C₄-alkyl, in particular C₁-C₄-alkoxy-C₂-C₄-alkyl, hydroxy-C₁-C₄-alkoxy-C₁-C₄alkyl, in particular hydroxy-C₂-C₄-alkoxy-C₂-C₄-alkyl, phenyl or benzyl, preferably ammonium, methylammonium, isopropylammonium, dimethylammonium, diisopropylammonium, trimethylammonium, tetramethylammonium, tetraethylammonium, tetrabutylammonium, pentylammonium, hexylammonium, heptylammonium, 2-hydroxyethylammonium (olamine salt), 2-(2-hydroxyethoxy)eth-1-ylammonium (diglycolamine salt), di(2-hydroxyeth-1-yl)ammonium (= diethanolammonium salt or diolamine salt), tri(2-hydroxyethyl)ammonium (= triethanolammonium salt or trolamine salt), mono-, di- and tri(hydroxypropyl)ammonium (= mono-, di- and tripropanolammonium), benzyltrimethylammonium, benzyltriethylammonium, furthermore phosphonium ions, sulfonium ions, preferably tri(C₁-C₄-alkyl)sulfonium such as trimethylsulfonium, and sulfoxonium ions, preferably tri(C₁-C₄-alkyl)sulfoxonium.

In the compositions according to the invention, the compounds that carry a carboxyl group can also be employed in the form of agriculturally acceptable derivatives, for example as amides such as mono- or di-C₁-C₆-alkylamides or arylamides, as esters, for example as allyl esters, propargyl esters, C₁-C₁₀-alkyl esters or alkoxyalkyl esters, and also as thioesters, for example as C₁-C₁₀-alkyl thioesters. Preferred mono- and di-C₁-C₆-alkylamides are the methyl- and the dimethylamides. Preferred arylamides are, for example, the anilidines and the 2-chloroanilides. Preferred alkyl esters are, for example, the methyl, ethyl, propyl, isopropyl, butyl, isobutyl, pentyl, mexyl (1-methylhexyl) or isooctyl (2-ethylhexyl) esters. Preferred C₁-C₄-alkoxy-C₁-C₄-alkyl esters are the straight-chain or branched C₁-C₄-alkoxyethyl esters, for example the methoxyethyl, ethoxyethyl or butoxyethyl (butoyl) esters. An example of the straight-chain or branched C₁-C₁₀-alkyl thioesters is the ethyl thioester. Preferred derivatives are the esters.

The compositions of the invention may also comprise, as a component C, one or more herbicide safeners. Herbicide safeners, also termed as safeners, are organic compounds which in some cases lead to better crop plant compatibility when applied jointly with specifically acting herbicides. Some safeners are themselves herbicidally active. In these cases, the safeners act as antidote or antagonist in the crop plants and thus reduce or even prevent damage to the crop plants. In a preferred embodiment of the invention, the composition contains at least one safener in an effective amount, which is generally at least 0.1 % by weight, in particular at least 0.2 or at least 0.5% by weight, based on the total amount of herbicide compound A (as active substance (a.s.)) and, if present, herbicide compound D (as active substance (a.s.)), e.g. in a ratio from 1:1000 to 1000:1, preferably in a ratio from 1:200 to 200:1, more preferably in a ratio from 1:75 to 75:1.

Suitable safeners, which can be used in the compositions according to the present invention, include benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, 2,2,5-trimethyl-3-(dichloracetyl)-1,3-oxazolidine, 4-(dichloroacetyl)-1-oxa-4-azaspiro[4.5]decane and oxabetrinil, as well as the agriculturally acceptable salts thereof and, provided they have a carboxyl group, their agriculturally acceptable derivatives, in particular their esters. 2,2,5-Trimethyl-3-(dichloroacetyl)-1,3-oxazolidine [CAS No. 52836-31-4] is also known under the name R-29148. 4-(Dichloroacetyl)-1-oxa-4- azaspiro[4.5]decane [CAS No. 71526-07-03] is also known under the names AD-67 and MON 4660.

As safener, the compositions according to the invention preferably comprise at least one of the compounds selected from the group of mefenpyr, naphthalic anhydride, isoxadifen, cloquintocet, the salts and esters of the aforementioned compounds.

In a particular preferred embodiment of the invention, the compositions of the invention comprise as a safener naphthalic anhydride or mefenpyr or a salt or an ester thereof, e.g. mefenpyr-diethyl.

If the compositions of the invention comprise a further herbicide component D, the relative weight ratio of herbicide compound A (as active substance (a.s.)) to the total amount of herbicide compounds D, is preferably from 20:1 to 1:1000, in particular from 10:1 to 1:100, wherein each herbicide compound D, which is an ester or a salt of an acid is calculated as the acid. In this embodiment the weight ratio of herbicide A and safener C is as defined above. Accordingly, in the methods and uses of the invention, the imidazolinone herbicide A, the adjuvant B, the herbicide compounds D and safener C are preferably applied within these weight ratios.

In addition to the herbicide compound A, the adjuvant B, and the optional safener C, the composition of the invention may contain one or more further herbicide compounds D. These further herbicide compounds D are usually selected from the following groups D.1 to D.8 of herbicide compounds:
- D.1: synthetic lipid biosynthesis inhibitors;
- D.2: acetolactate synthase inhibitors;
- D.3: photosynthesis inhibitors;
- D.4: protoporphyrinogen-IX-oxidase inhibitors;
- D.5: bleacher herbicides;
- D.6: auxinic herbicides;
- D.7: enolpyruvyl shikimate 3-phosphate synthase (EPSPS) inhibitors; and
- D.8: glutamine synthetase (GS) inhibitors.

Compounds of the group of synthetic lipid biosynthesis inhibitors (group D.1) include in particular those herbicide compounds which are inhibitors of acetyl-CoA carboxylase (hereinafter termed ACCase inhibitors or ACC herbicides) and which belong to the group A of the HRAC classification system. Preferred herbicide compounds of this group D.1 are selected from the group consisting of clethodim, cycloxydim, profoxydim, sethoxydim, tepraloxydim, tralkoxydim, clodinafop, diclofop, fenoxaprop, fenoxaprop-P and propaquizafop, where applicable, the salts and esters thereof, such as clodinafop-propargyl, diclofop-methyl, fenoxaprop-ethyl, fenoxaprop-P-ethyl.

Compounds of the group of acetolactate synthase inhibitors (group D.2, hereinafter also termed ALS-inhibitors) belong to the group B of the HRAC classification system. Preferred herbicide compounds of this group are selected from the group of sulfonylureas, such as amidosulfuron, chlorsulfuron, flucetosulfuron, flupyrsulfuron, iodosulfuron, mesosulfuron, metazosulfuron, metsulfuron, prosulfuron, sulfosulfuron, thifensulfuron, triasulfuron, tribenuron or tritosulfuron; imidazolinones, such as imazamox, imazapic, imazapyr, imazaquin or imazethapyr; triazolopyrimidine herbicides such as florasulam or pyroxsulam; triazolone herbicides such as flucarbazone, propoxycarbazone or thiencarbazone, and pyrimisulfan, and, where applicable, the salts and esters thereof such as mesosulfuron-methyl, metsulfuron-methyl, thifensulfuron-methyl, tribenuron-methyl, thiencarbazone-methyl and the like. Preferred compounds of the group D.2 are amidosulfuron, chlorsulfuron, florasulam, flucarbazone, flucetosulfuron, flupyrsulfuron, imazamox, iodosulfuron, mesosulfuron-methyl, metazosulfuron, metsulfuron-methyl, propoxycarbazone, prosulfuron, pyrimisulfan, pyroxsulam, sulfosulfuron, thiencarbazone, thifensulfuron-methyl, triasulfuron, tribenuron-methyl, tritosulfuron and, where applicable, the salts and esters thereof. Particular preferred compounds of the group D.2 are selected from the group consisting of amidosulfuron, chlorsulfuron, florasulam, flucetosulfuron, flupyrsulfuron, imazamox, metazosulfuron, metsulfuron-methyl, prosulfuron, pyrimisulfan, sulfosulfuron, thiencarbazone, thifensulfuron-methyl, triasulfuron, tribenuron-methyl and tritosulfuron and, where applicable, the salts thereof.

Compounds of the group of photosynthesis inhibitors (group D.3) include in particular those herbicide compounds which are inhibitors of photosynthesis at photosystem II (hereinafter termed PSII inhibitors) and which belong to the groups C1 to C3 of the HRAC classification system. Preferred herbicide compounds of this group D.3 belong to the group C3 of the HRAC classification system and are in particular selected from the group consisting of bentazone, bromoxynil, ioxynil and, where applicable, the salts and esters thereof.

Compounds of the group of protoporphyrinogen-IX-oxidase inhibitors (group D.4, hereinafter also termed as protox inhibitors) belong to the group E of the HRAC classification system. Preferred herbicide compounds of this group are selected from the group of bencarbazone, carfentrazone, cinidon-ethyl, pyraflufen and, where applicable, the salts and esters thereof such as carfentrazone-ethyl or pyraflufen-ethyl.

Compounds of the group of bleacher herbicides (group D.5) belong to the group F1 to F3 of the HRAC classification system. Preferred herbicide compounds of this group D5 are in particular selected from the group consisting of picolinafen and pyrasulfotole, and, where applicable, the salts thereof.

Compounds of the group of the auxinic herbicides (group D.6, hereinafter also termed synthetic auxins) have an action like indole acetic acid and belong to the group O of the HRAC classification system. Examples of herbicide compounds of this group include:
- D.6.1: benzoic acid herbicides, such as dicamba, tricamba, chloramben or 2,3,6-TBA (2,3,6-trichlorobenzoic acid) and the salts and esters thereof;
- D.6.2: pyridinecarboxylic acid herbicides, in particular aminopyralid, clopyralid, picloram, triclopyr or fluroxypyr and the salts and esters thereof as mentioned above;
- D.6.3: aminocyclopyrachlor, the salts and esters thereof as mentioned above;
- D.6.4: phenoxycarboxylic acid herbicides, e.g. phenoxyacetic acid herbicides such as 2,4-D, 3,4-DA, MCPA, 2,4,5-T, phenoxypropionic acid herbicides such as 2,4-DP (dichlorprop), 2,4-DP-P, 4-CPP, 3,4-DP, fenoprop, MCPP (mecoprop), MCPP-P, and phenoxybutyric acid herbicides such as 4-CPB, 2,4-DB, 3,4-DB, 2,4,5-TB, MCPB, their salts and their esters, in particular one of the following phenoxycarboxylic acid herbicides: 2,4-D, 2,4-DB, 2,4-DP (dichlorprop), 2,4-DP-P, MCPP (mecoprop), MCPP-P, MCPA, MCPB, their salts and their esters; and
- D.6.5: quinolinecarboxylic acid herbicides, e.g. quinclorac and quinmerac and the salts and esters thereof.

Compounds of the group of enolpyruvyl shikimate 3-phosphate synthase (EPSPS) inhibitors (D7) include glyphosate and sulfosate and the salts and esters thereof.

Compounds of the group of glutamine synthetase (GS) inhibitors (D8) include bilanafos (biala-phos) and glufosinate and the salts and esters thereof.

Preferred compound of this group are selected from the group consisting of aminocyclopyrachlor, 2,4-D, 2,4-DB, 2,4-DP, 2,4-DP-P, clopyralid, dicamba, fluroxypyr, MCPA, MCPB, MCPP, MCPP-P, quinclorac, quinmerac and, where applicable, the salts and esters thereof, such as aminocyclopyrachlor-potassium, aminocyclopyrachlor-methyl, 2,4-D-ammonium, 2,4-D-butotyl, 2,4-D-2-butoxypropyl, 2,4-D-3-butoxypropyl, 2,4-D-butyl, 2,4-D-diethylammonium, 2,4-D-dimethylammonium, 2,4-D-diolamine, 2,4-D-dodecylammonium, 2,4-D-ethyl, 2,4-D-2-ethylhexyl, 2,4-D-heptylammonium, 2,4-D-isobutyl, 2,4-D-isoctyl, 2,4-D-isopropyl, 2,4-D-isopropylammonium, 2,4-D-lithium, 2,4-D-meptyl, 2,4-D-methyl, 2,4-D-octyl, 2,4-D-pentyl, 2,4-D-propyl, 2,4-D-sodium, 2,4-D-tefuryl, 2,4-D-tetradecylammonium, 2,4-D-triethylammonium, 2,4-D-tris(2-hydroxypropyl)ammonium, 2,4-D-trolamine, MCPA-butotyl, MCPA-butyl, MCPA-dimethylammonium, MCPA-diolamine, MCPA-ethyl, MCPA-2-ethylhexyl, MCPA-isobutyl, MCPA-isoctyl, MCPA-isopropyl, MCPA-methyl, MCPA-olamine, MCPA-potassium, MCPA-sodium, MCPA-trolamine, dichlorprop-butotyl, dichlorprop-dimethylammonium, dichlorprop-ethylammonium, dichlorprop-2-ethylhexyl, dichlorprop-isoctyl, dichlorprop-methyl, dichlorprop-potassium, dichlorprop-sodium, dicloprop-P-dimethylammonium, mecoprop-dimethylammonium, mecoprop-diolamine, mecoprop-ethadyl, mecoprop-isoctyl, mecoprop-methyl, mecoprop-potassium, mecoprop-sodium, mecoprop-trolamine, mecoprop-P-dimethylammonium, mecoprop-P-isobutyl, mecoprop-P-potassium, MCPB-methyl, MCPB-ethyl and MCPB-sodium. Particular preferred compound of this group are selected from the group consisting of aminocyclopyrachlor, 2,4-D, 2,4-DB, 2,4-DP, 2,4-DP-P, clopyralid, dicamba, fluroxypyr, MCPA, MCPB, MCPP, MCPP-P, quinclorac, quinmerac and, where applicable, the salts and esters thereof.

In a first particular embodiment of the invention (embodiment I), the composition comprises the imidazolinone herbicide A, the adjuvant B, and no safener C and no further herbicide compound D.

According to the embodiment la, the composition comprises the imidazolinone herbicide imazamox, the adjuvant B selected from phosphate ester of polyalkoxylated fatty alcohol; and no safener C and no further herbicide compound D.

In a second particular embodiment of the invention (embodiment II), the composition comprises the imidazolinone herbicide A, the adjuvant B, and no safener C and a further herbicide compound D.

The following embodiments, which differ from the embodiment la (described above) by the presence of a further herbicide compound D, are particularly preferred:

| embodiments II | components |
|---|---|
| IIa1 | Ia+pendimethalin |
| IIa2 | Ia+bentazone |
| IIa3 | Ia+MCPA |
| IIa4 | Ia+cycloxydim |
| IIa5 | Ia+clethodim |
| IIa6 | Ia+fenoxaprop-ethyl |
| IIa7 | Ia+propaquizafop |
| IIa8 | Ia+tribenuron |

In the context of the present invention, particularly preferred compositions are compositions according to embodiments I, Ia, IIa1, IIa2, IIa3, IIa4, IIa5, IIa6, IIa7, IIa8, wherein the adjuvant B is a phosphate ester of polyalkoxylated fatty alcohol. Said embodiments are termed I_1, Ia_1, IIa1_1, IIa2_1, IIa3_1, IIa4_1, IIa5_1, IIa6_1, IIa7_1, IIa8_1.
In the context of the present invention, most particularly preferred compositions are compositions according to embodiment Ia_1.
The compositions of the present invention are suitable for controlling a large number of harmful plants, including monocotyledonous weeds and dicotyledonous weeds.
They are particularly useful for controlling annual weeds such as gramineous weeds (grasses) including *Echinochloa* species such as barnyardgrass (*Echinochloa crusgalli var. crus-galli*),
*Digitaria* species such as crabgrass (*Digitaria sanguinalis*), *Setaria* species such as green foxtail (*Setaria viridis*) and giant foxtail (*Setaria faberii*), *Sorghum* species such as johnsongrass (*Sorghum halepense Pers.*)*, Avena* species such as wild oats (*Avena fatua*), *Cenchrus* species such as *Cenchrus echinatus*, *Bromus* species, *Lolium* species, *Phalaris* species, *Eriochloa* species, *Panicum* species, *Brachiaria* species, annual bluegrass (*Poa annua*), blackgrass (*Alopecurus myosuroides), Aegilops cylindrica, Agropyron repens, Apera spica-venti, Eleusine indica, Cynodon dactylon* and the like.
The compositions of the present invention are also particularly useful for controlling a large number of dicotyledonous weeds, in particular broadleaf weeds, including *Polygonum* species such as wild buckwheat (*Polygonum convolvolus*)*, Amaranthus* species such as pigweed (*Amaranthus retroflexus*), *Chenopodium* species such as common lambsquarters (*Chenopodium album* L.), *Sida* species such as prickly sida *(Sida spinosa* L.), *Ambrosia* species such as common ragweed (*Ambrosia artemisiifolia*), *Acanthospermum* species, *Anthemis* species, *Atriplex* species, *Cirsium* species *(Cirsium arvense), Convolvulus* species, *Conyza* species such as horseweed (*Conyza canadensis), Cassia* species, *Commelina* species, *Datura* species, *Euphorbia* species, *Geranium* species, *Galinsoga* species, morning glory (*Ipomoea* species), *Lamium* species, *Malva* species, *Matricaria* species, *Portulaca* species (*Portulaca oleracea*) *Sysimbrium* species, *Solanum* species, *Xanthium* species, *Veronica* species, *Viola* species, common chickweed *(Stellaria media*), velvetleaf *(Abutilon theophrasti*), Hemp sesbania (*Sesbania exaltata* Cory), *Anoda cristata, Bidens pilosa, Brassica kaber, Capsella bursa-pastoris, Centaurea cyanus, Galeopsis tetrahit, Galium aparine, Helianthus annuus, Desmodium tortuosum, Kochia scoparia, Mercurialis annua, Myosotis arvensis, Papa ver rhoeas, Raphanus raphanistrum, Salsola kali, Sinapis arvensis, Sonchus arvensis, Thlaspi arvense, Tagetes minuta, Richardia brasiliensis*, and the like.

The compositions according to the invention are exceedingly useful to effectively combat certain weeds, in particular broad leaf weeds, which cannot be sufficiently controlled with known pesticide formulations, e.g *Portulaca oleracea, Chenopodium album, Mercurialis annua, Cirsium arvense, Papa ver rhoeas.*

Correspondingly, the present invention relates in particular to methods for the control of undesirable vegetation selected from broad leaf weeds, in particular from *Portulaca oleracea, Chenopodium album, Mercurialis annua, Cirsium arvense* and *Papaver rhoeas*, which comprises allowing a composition according to the invention to act on the plants to be controlled or their habitat.

The compositions of the present invention are suitable for combating/controlling undesired vegetation in *Brassicaceae species* (*B. juncea*, *B. napus*, *B. rapa*), sunflower, *Gramineae* species (e.g., barley, maize, rice, sorghum, sugar cane, wheat), Leguminosae (e.g., bean, lentil, pea, soybean), *Solanaceae* species (e.g., potato), *Gossypium* species (e.g., cotton), *Amaranthaceae* species (e.g., grain amaranth, quinoa, sugar beet), alfalfa (*Medicago sativa*); and rice (*Oryza sativa*).

If not stated otherwise, the compositions of the invention are suitable for application in any variety of the aforementioned crop plants.

The compositions according to the invention are particularly useful to effectively control undesirable vegetation in the presence of crops, which are tolerant to the imidazolinone herbicide A. Preferably, the crop plants are not significantly injured by an application of the composition according to the present invention, which allows for sufficient control of undesirable vegetation.

Correspondingly, the present invention relates in particular to methods for the control of undesirable vegetation, which comprises allowing - in the presence of imidazolinone tolerant crop plants - a composition according to the invention to act on the plants to be controlled or their habitat.

Examples for suitable crop plants are those described in
- WO2007/005581 for Sunflowers containing an herbicide tolerance trait of (1) the CLHA-Plus trait, i.e.: an AHASL with an A122(*At*)T substitution, or (2) an AHASL variant thereof that contains both the A122(*At*)T substitution and a second substitution that can be one or more of P197Q, P197S, T203I, T203X, A205D, A205V, W574L, A653N, A653T, A653F, or A653V (each of which is understood as referring to an *A. thaliana*AHASL-numbered position). Specific deposited lines containing the AHASL-A122(*At*)T trait alone are Line GM40 (ATCC PTA-6716) and Line GM1606 (ATCC PTA-7606).
- WO2008/124431 for Sunflowers containing two herbicide tolerance traits, e.g., both the CLHA-Plus trait (AHASL-A122(*At*)T) and a second AHASL trait, e.g., an AHASL with an A205(*At*)V substitution [e.g., Hybrid Line GM40 x HA425] or an AHASL with a P197(*At*)L substitution [e.g., Hybrid Line GM40 x SURES-2].

Nomenclature such as "S653(*At*)N" refers to a Serine-to-Asparagine substitution at amino acid position 653 of the AHASL polypeptide, as numbered according to the *Arabidopsis thaliana* (*At*) AHASL numbering standard.

According to a preferred embodiment, the present invention relates to methods for the control of undesirable vegetation, which comprises allowing - in the presence of imidazolinone tolerant crop plants - a composition according to the invention to act on the plants to be controlled or their habitat, and where the crop plant is selected from sunflowers containing the CLHA-Plus trait.

According to another preferred embodiment, the present invention relates to the use of compositions according to the invention for controlling undesirable vegetation in cultures of crop plants, where the crop plant is selected from sunflowers containing the CLHA-Plus trait.

The compositions according to the invention can also be used in crop plants that have been modified by breeding, mutagenesis or genetic engineering, e.g. have been rendered tolerant to applications of specific classes of herbicides, such as auxinic herbicides such as dicamba or 2,4-D; bleacher herbicides such as 4-hydroxyphenylpyruvate dioxygenase (HPPD) inhibitors or phytoene desaturase (PDS) inhibitors; acetolactate synthase (ALS) inhibitors such as sulfonylureas or imidazolinones; enolpyruvyl shikimate 3-phosphate synthase (EPSP) inhibitors such as glyphosate; glutamine synthetase (GS) inhibitors such as glufosinate; protoporphyrinogen-IX oxidase inhibitors; lipid biosynthesis inhibitors such as acetylCoA carboxylase (ACCase) inhibitors; or oxynil (i. e. bromoxynil or ioxynil) herbicides as a result of conventional methods of breeding or genetic engineering; furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxinic herbicides, or ACCase inhibitors. These herbicide resistance technologies are, for example, described in Pest Management Science 61, 2005, 246; 61, 2005, 258; 61, 2005, 277; 61, 2005, 269; 61, 2005, 286; 64, 2008, 326; 64, 2008, 332; Weed Science 57, 2009, 108; Australian Journal of Agricultural Research 58, 2007, 708; Science 316, 2007, 1185; and references quoted therein. Several cultivated plants have been rendered tolerant to herbicides by mutgenesis and conventional methods of breeding, e. g., Clearfield^{®} Oilseed rape, Clearfield^{®} sunflower (BASF SE, Germany) being tolerant to imidazolinones, e. g., imazamox, or ExpressSun^{®} sunflowers (DuPont, USA) being tolerant to sulfonyl ureas, e. g., tribenuron. Genetic engineering methods have been used to render cultivated plants such as soybean, cotton, corn, beets and rape, tolerant to herbicides such as glyphosate, imidazolinones and glufosinate, some of which are under development or commercially available under the brands or trade names RoundupReady^{®} (glyphosate tolerant, Monsanto, USA), Cultivance^{®} (imidazolinone tolerant, BASF SE, Germany) and LibertyLink^{®} (glufosinate tolerant, Bayer CropScience, Germany).

The compositions according to the invention can also be used in genetically modified crop plants. The term "genetically modified plants" is to be understood as plants whose genetic material has been modified by the use of recombinant DNA techniques to include an inserted sequence of DNA that is not native to that plant species' genome or to exhibit a deletion of DNA that was native to that species' genome, wherein the modification(s) cannot readily be obtained by cross breeding, mutagenesis or natural recombination alone. Often, a particular genetically modified plant will be one that has obtained its genetic modification(s) by inheritance through a natural breeding or propagation process from an ancestral plant whose genome was the one directly treated by use of a recombinant DNA technique. Typically, one or more genes have been integrated into the genetic material of a genetically modified plant in order to improve certain properties of the plant. Such genetic modifications also include but are not limited to targeted post-translational modification of protein(s), oligo- or polypeptides. e. g., by inclusion therein of amino acid mutation(s) that permit, decrease, or promote glycosylation or polymer additions such as prenylation, acetylation farnesylation, or PEG moiety attachment.

The compositions according to the invention can also be used in crop plants that have been modified, e.g. by the use of recombinant DNA techniques to be capable of synthesizing one or more insecticidal proteins, especially those known from the bacterial genus *Bacillus*, particularly from *Bacillus thuringiensis,* such as delta-endotoxins, e. g., CryIA(b), CryIA(c), CryIF, CryIF(a2), CryIIA(b), CryIIIA, CryIIIB(b1) or Cry9c; vegetative insecticidal proteins (VIP), e. g., VIP1, VIP2, VIP3 or VIP3A; insecticidal proteins of bacteria colonizing nematodes, e. g., *Photorhabdus* spp. or *Xenorhabdus* spp.; toxins produced by animals, such as scorpion toxins, arachnid toxins, wasp toxins, or other insect-specific neurotoxins; toxins produced by fungi, such as Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxy-steroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilbene synthase, bibenzyl synthase, chitinases or glucanases. In the context of the present invention these insecticidal proteins or toxins are to be understood expressly also as including pre-toxins, hybrid proteins, truncated or otherwise modified proteins. Hybrid proteins are characterized by a new combination of protein domains, (see, e. g., WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g., in the publications mentioned above. These insecticidal proteins contained in the genetically modified plants impart to the plants producing these proteins tolerance to harmful pests from all taxonomic groups of arthropods, especially to beetles (Coleoptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g., Agrisure® CB) and Bt176 from Syngenta Seeds SAS, France, (corn cultivars producing the Cry1Ab toxin and PAT enzyme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).

The compositions according to the invention can also be used in crop plants that have been modified, e.g. by the use of recombinant DNA techniques to be capable of synthesizing one or more proteins to increase the resistance or tolerance of those plants to bacterial, viral or fungal pathogens. Examples of such proteins are the so-called "pathogenesis-related proteins" (PR proteins, see, e.g., EP-A 392 225), plant disease resistance genes (e. g., potato cultivars, which express resistance genes acting against *Phytophthora infestans* derived from the Mexican wild potato, *Solanum bulbocastanum*) or T4-lysozym (e.g., potato cultivars capable of synthesizing these proteins with increased resistance against bacteria such as *Erwinia amylovora).* The methods for producing such genetically modified plants are generally known to the person skilled in the art and are described, e.g., in the publications mentioned above.

The compositions according to the invention can also be used in crop plants that have been modified, e.g. by the use of recombinant DNA techniques to be capable of synthesizing one or more proteins to increase the productivity (e.g., bio-mass production, grain yield, starch content, oil content or protein content), tolerance to drought, salinity or other growth-limiting environmental factors or tolerance to pests and fungal, bacterial or viral pathogens of those plants.

The compositions according to the invention can also be used in crop plants that have been modified, e.g. by the use of recombinant DNA techniques to be capable of producing an increased amount of ingredients or new ingredients, which are suitable to improve human or animal nutrition, e. g., oil crops that produce health-promoting long-chain omega-3 fatty acids or unsaturated omega-9 fatty acids (e. g., Nexera® rape, Dow AgroSciences, Canada).

The compositions of the present invention can be applied in a conventional manner by a skilled personal familiar with the techniques of applying herbicides. Suitable techniques include spraying, atomizing, dusting, spreading or watering. The type of application depends on the intended purpose in a well known manner; in any case, they should ensure the finest possible distribution of the active ingredients according to the invention.

The compositions can be applied pre- or post-emergence, i.e. before, during and/or after emergence of the undesirable plants. When the compositions are used in crops, they can be applied after seeding and before or after the emergence of the crop plants. The compositions invention can, however, also be applied prior to seeding of the crop plants.

It is a particular benefit of the compositions according to the invention that they have a very good post-emergence herbicide activity, i.e. they show a good herbicidal activity against emerged undesirable plants. Thus, in a preferred embodiment of invention, the compositions are applied post-emergence, i.e. during and/or after, the emergence of the undesirable plants. It is particularly advantageous to apply the mixtures according to the invention post emergent when the undesirable plant starts with leaf development up to flowering. Since the compositions of the present invention show good crop tolerance, even when the crop has already emerged, they can be applied after seeding of the crop plants and in particular during or after the emergence of the crop plants.

In any case herbicide compound A, and the adjuvant B and, if desired, herbicide component D and/or safener C, can be applied simultaneously or in succession.
In the methods according to the present invention, the herbicide compound A and the adjuvant B are preferably applied simultaneously.

The compositions are applied to the plants mainly by spraying, in particular foliar spraying. Application can be carried out by customary spraying techniques using, for example, water as carrier and spray liquor rates of 10 to 2000 l/ha or 50 to 1000 l/ha (for example from 100 to 500 l/ha). Application of the herbicidal compositions by the low-volume and the ultra-low-volume method is possible, as is their application in the form of microgranules.

In the case of a post-emergence treatment of the plants, the herbicidal mixtures or compositions according to the invention are preferably applied by foliar application. Application may be effected, for example, by usual spraying techniques with water as the carrier, using amounts of spray mixture of approx. 50 to 1000 l/ha.

In the method of the invention, the application rate of the herbicide compound A, imazamox, is generally from 5 to 100 g/ha and in particular from 12 to 50 g/ha.
The application can be a single or split application.

In the method of the invention, the application rate of the adjuvant B, is generally from 25 to 2000 g/ha, in particular from 50 to 1000 g/ha.

In the method of the invention, the application rate of the herbicide safener compound C (in case of salts calculated as the acid) is generally from 5 to 75 g/ha and in particular from 10 to 50 g/ha.

In the method of the invention, the application rate of the further herbicide compound D (in case of salts calculated as the acid) is generally from 1 to 2500 g/ha and in particular from 5 to 1000 g/ha.

The rate of application of the synthetic lipid biosynthesis inhibitors, in particular ACCase inhibitors, mentioned as group D.1 is generally from 5 to 750 g/ha, in particular from 10 to 500 g/ha of active substance (a.s.).

The rate of application of the ALS inhibitors mentioned as group D.2 is generally from 1 to 500 g/ha, in particular from 3 to 200 g/ha of active substance (a.s.).

The rate of application of the PSII inhibitors mentioned as group D.3 is generally from 5 to 1000 g/ha, in particular from 10 to 500 g/ha of active substance (a.s.).

The rate of application of the Protox inhibitors mentioned as group D.4 is generally from 1 to 1000 g/ha, in particular from 5 to 500 g/ha of active substance (a.s.).

The rate of application of the bleacher herbicides mentioned as group D.5 is generally from 5 to 750 g/ha, in particular from 10 to 500 g/ha of active substance (a.s.).

The rate of application of the auxinic herbicides mentioned as group D.6 is generally from 5 to 2500 g/ha, in particular from 10 to 1500 g/ha of active substance (a.s.).

The rate of application of the enolpyruvyl shikimate 3-phosphate synthase (EPSPS) inhibitors mentioned as group D.7 is generally from 20 to 5000 g/ha, in particular from 20 to 1000 g/ha of active substance (a.s.).

The rate of application of the glutamine synthetase (GS) inhibitors mentioned as group D.8 is generally from 20 to 2000 g/ha, in particular from 20 to 800 g/ha of active substance (a.s.).

The present invention also relates to formulations of the compositions according to the present invention. The formulations contain, besides the composition, at least one organic or inorganic carrier material. The formulations may also contain, if desired, one or more surfactants and, if desired, one or more further auxiliaries customary for crop protection compositions.

The formulation may be in the form of a single package formulation containing both the herbicide compound A and the adjuvant B, and, if desired, herbicide safener compound C and/or further herbicide D, together with liquid and/or solid carrier materials, and, if desired, one or more surfactants and, if desired, one or more further auxiliaries customary for crop protection compositions. The formulation may be in the form of a two package formulation, wherein one package contains a formulation of herbicide compound A while the other package contains the adjuvant B and, if desired, herbicide safener compound C and/or further herbicide compound D, and wherein both formulations contain at least one carrier material, if desired, one or more surfactants and, if desired, one or more further auxiliaries customary for crop protection compositions. The formulation may also be in the form of a two package formulation, wherein one package contains a formulation of herbicide compound A and the adjuvant B and optionally the herbicide safener compound C, while the other package contains a formulation of the further herbicide compound D, and wherein both formulations contain at least one carrier material, if desired, one or more surfactants and, if desired, one or more further auxiliaries customary for crop protection compositions. In the case of two package formulations the two formulations are preferably mixed prior to application. Preferably the mixing is performed as a tank mix, i.e. the formulations are mixed immediately prior or upon dilution with water.

In the formulation of the present invention the active ingredients, i.e. herbicide compound A, the adjuvant B and optional further actives (e.g. herbicide safener C and/or further herbicide compound D) are present in suspended, emulsified or dissolved form. The formulation according to the invention can be in the form of aqueous solutions, powders, suspensions, also highly-concentrated aqueous, oily or other suspensions or dispersions, aqueous emulsions, aqueous microemulsions, aqueous suspo-emulsions, oil dispersions, pastes, dusts, materials for spreading or granules.

Depending on the formulation type, they comprise one or more liquid or solid carriers, if appropriate surfactants (such as dispersants, protective colloids, emulsifiers, wetting agents and tackifiers), and if appropriate further auxiliaries which are customary for formulating crop protection products. The person skilled in the art is sufficiently familiar with the recipes for such formulations. Further auxiliaries include e.g. organic and inorganic thickeners, bactericides, antifreeze agents, antifoams, colorants and, for seed formulations, adhesives.

Suitable carriers include liquid and solid carriers. Liquid carriers include e.g. non- aqueous solvents such as cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, e.g. amines such as N-methylpyrrolidone, and water as well as mixtures thereof. Solid carriers include e.g. mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic materials, fertilizers such as ammonium sulfate, ammonium phosphate, ammonium nitrate, ureas, and products of vegetable origin such as cereal meal, tree bark meal, wood meal and nutshell meal, cellulose powders, or other solid carriers.

Suitable surfactants (adjuvants, wetting agents, tackifiers, dispersants and also emulsifiers) are the alkali metal salts, alkaline earth metal salts and ammonium salts of aromatic sulfonic acids, for example lignosulfonic acids (e.g. Borrespers-types, Borregaard), phenolsulfonic acids, naphthalenesulfonic acids (Morwet types, Akzo Nobel) and dibutylnaphthalenesulfonic acid (Nekal types, BASF SE), and of fatty acids, alkyl- and alkylarylsulfonates, alkyl sulfates, lauryl ether sulfates and fatty alcohol sulfates, and salts of sulfated hexa-, hepta- and octadecanols, and also of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether, ethoxylated isooctyl-, octyl-or nonylphenol, alkylphenyl or tributylphenyl polyglycol ether, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignosulfite waste liquors and proteins, denaturated proteins, polysaccharides (e.g. methylcellulose), hydrophobically modified starches, polyvinyl alcohol (Mowiol types Clariant), polycarboxylates (BASF SE, Sokalan types), polyalkoxylates, polyvinylamine (BASF SE, Lupamine types), polyethyleneimine (BASF SE, Lupasol types), polyvinylpyrrolidone and copolymers thereof.

Examples of thickeners (i.e. compounds which impart to the formulation modified flow properties, i.e. high viscosity in the state of rest and low viscosity in motion) are polysaccharides, such as xanthan gum (Kelzan® from Kelco), Rhodopol® 23 (Rhone Poulenc) or Veegum® (from R.T. Vanderbilt), and also organic and inorganic sheet minerals, such as Attaclay® (from Engelhardt).

Examples of antifoams are silicone emulsions (such as, for example, Silikon^{®} SRE, Wacker or Rhodorsil® from Rhodia), long-chain alcohols, fatty acids, salts of fatty acids, organofluorine compounds and mixtures thereof.

Bactericides can be added for stabilizing the aqueous herbicidal formulations. Examples of bactericides are bactericides based on diclorophen and benzyl alcohol hemiformal (Proxel® from ICI or Acticide® RS from Thor Chemie and Kathon® MK from Rohm & Haas), and also isothiazolinone derivates, such as alkylisothiazolinones and benzisothiazolinones (Acticide MBS from Thor Chemie).

Examples of antifreeze agents are ethylene glycol, propylene glycol, urea or glycerol.

Examples of colorants are both sparingly water-soluble pigments and water-soluble dyes. Examples which may be mentioned are the dyes known under the names Rhodamin B, C.I. Pigment Red 112 and C.I. Solvent Red 1, and also pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples of adhesives are polyvinylpyrrolidone, polyvinyl acetate, polyvinyl alcohol and tylose.

To prepare emulsions, pastes or oil dispersions, the active the components, as such or dissolved in an oil or solvent, can be homogenized in water by means of wetting agent, tackifier, dispersant or emulsifier. Alternatively, it is possible to prepare concentrates consisting of active substance, wetting agent, tackifier, dispersant or emulsifier and, if desired, solvent or oil, and these concentrates are suitable for dilution with water.

Powders, materials for spreading and dusts can be prepared by mixing or concomitant grinding of the active the components A and B and optionally safener C and optionally herbicide D with a solid carrier.

Granules, e.g. coated granules, impregnated granules and homogeneous granules, can be prepared by binding the active ingredients to solid carriers.

The formulations of the invention comprise a herbicidally effective amount of the composition of the present invention. The concentrations of the active ingredients in the formulations can be varied within wide ranges. In general, the formulations comprise from 1 to 98% by weight, preferably 10 to 60% by weight, of active ingredients (sum of topramezone, herbicide compound B and optionally further active compounds). The active ingredients are employed in a purity of from 90% to 100%, preferably 95% to 100% (according to NMR spectrum).

The active herbicide compound A, the adjuvant B as well as the compositions according to the invention can, for example, be formulated as follows:

### 1. Products for dilution with water

### A Water-soluble concentrates

10 parts by weight of active compound (or composition) are dissolved in 90 parts by weight of water or a water-soluble solvent. As an alternative, wetters or other adjuvants are added. The active compound dissolves upon dilution with water. This gives a formulation with an active compound content of 10% by weight.

### B Dispersible concentrates

20 parts by weight of active compound (or composition) are dissolved in 70 parts by weight of cyclohexanone with addition of 10 parts by weight of a dispersant, for example polyvinylpyrrolidone. Dilution with water gives a dispersion. The active compound content is 20% by weight.

### C Emulsifiable concentrates

15 parts by weight of active compound (or composition) are dissolved in 75 parts by weight of an organic solvent (e.g. alkylaromatics) with addition of calcium dodecylbenzenesulfonate and castor oil ethoxylate (in each case 5 parts by weight). Dilution with water gives an emulsion. The formulation has an active compound content of 15% by weight.

### D Emulsions

25 parts by weight of active compound (or composition) are dissolved in 35 parts by weight of an organic solvent (e.g. alkylaromatics) with addition of calcium dodecylbenzenesulfonate and castor oil ethoxylate (in each case 5 parts by weight). This mixture is introduced into 30 parts by weight of water by means of an emulsifier (Ultraturrax) and made into a homogeneous emulsion. Dilution with water gives an emulsion. The formulation has an active compound content of 25% by weight.

### E Suspensions

In an agitated ball mill, 20 parts by weight of active compound (or composition) are comminuted with addition of 10 parts by weight of dispersants and wetters and 70 parts by weight of water or an organic solvent to give a fine active compound suspension. Dilution with water gives a stable suspension of the active compound. The active compound content in the formulation is 20% by weight.

### F Water-dispersible granules and water-soluble granules

50 parts by weight of active compound (or composition) are ground finely with addition of 50 parts by weight of dispersants and wetters and made into water-dispersible or water-soluble granules by means of technical appliances (for example extrusion, spray tower, fluidized bed). Dilution with water gives a stable dispersion or solution of the active compound. The formulation has an active compound content of 50% by weight.

### G Water-dispersible powders and water-soluble powders

75 parts by weight of active compound (or composition) are ground in a rotor-stator mill with addition of 25 parts by weight of dispersants, wetters and silica gel. Dilution with water gives a stable dispersion or solution of the active compound. The active compound content of the formulation is 75% by weight.

### H Gel formulations

In a ball mill, 20 parts by weight of active compound (or composition), 10 parts by weight of dispersant, 1 part by weight of gelling agent and 70 parts by weight of water or of an organic solvent are mixed to give a fine suspension. Dilution with water gives a stable suspension with active compound content of 20% by weight.

### 2. Products to be applied undiluted

### I Dusts

5 parts by weight of active compound (or composition) are ground finely and mixed intimately with 95 parts by weight of finely divided kaolin. This gives a dusting powder with an active compound content of 5% by weight.

### J Granules (GR, FG, GG, MG)

0.5 parts by weight of active compound (or composition) are ground finely and associated with 99.5 parts by weight of carriers. Current methods here are extrusion, spray-drying or the fluidized bed. This gives granules to be applied undiluted with an active compound content of 0.5% by weight.

### K ULV solutions (UL)

10 parts by weight of active compound (or composition) are dissolved in 90 parts by weight of an organic solvent, for example xylene. This gives a product to be applied undiluted with an active compound content of 10% by weight.

Aqueous use forms can be prepared from emulsion concentrates, suspensions, pastes, wettable powders or water-dispersible granules by adding water.

It may furthermore be beneficial to apply the compositions of the invention alone or in combination with other herbicides, or else in the form of a mixture with other crop protection agents, for example together with agents for controlling pests or phytopathogenic fungi or bacteria. Also of interest is the miscibility with mineral salt solutions, which are employed for treating nutritional and trace element deficiencies. Other additives such as non-phytotoxic oils and oil concentrates may also be added.

### Use Examples

Surfactant 1: Klearfac® AA270, liquid phosphate ester (free acid) of a polyalkoxylated fatty alcohol, ca. 13 wt.% water, ca. 10 wt.% phosphoric acid, acid number 200-220 mg KOH/g, dynamic viskosity 2.2025 mPas at 25 °C, pH 2,2 (1% in water), surface tension (25 °C, 0,1 % aqueous solution) 28,1 dynes/cm, commercially available from BASF Corporation, USA.
Surfactant 2: anionic surfactant, pH 6-7 (5 % in water), surface tension about 29 mN/m (0,1 % in water). *=LutensitABO*
Surfactant 3: nonionic surfactant, soluble in water, pH 5-7 (1 % in water), HLB value 15-17. = *Tween 20*
Surfactant 4: Acid phosphoric ester of a fatty alcohol ethoxylate, liquid, pH 2 (5 wt% in water), surface tension (23 °C, 0,1 % in water) 38-41 mN/m, soluble in water (>10 wt%). *=L utenit A-EP*
Surfactant 5: ethoxylated/propoxylated linear, saturated C₁₆₋₁₈ fatty alcohol containing 15 to 30 alkylenoxide equivalents *= RD168369*

**Table 1: Examples for adjuvants B according to the present invention:**

| [g/l] | Example 1 | Example 2 | Example 3 | Example 4 |
|---|---|---|---|---|
| Imazamox | 25 | 25 | 40 | 33,3 |
| Surfactant 3 | 250 | 250 | - | - |
| Surfactant 1 | 300 | - | 350 | 300 |
| Surfactant 2 | 25 | 25 | 60 | 40 |
| Surfactant 4 | - | 300 | - | - |
| Surfactant 5 | - | - | 200 | 150 |
| Dimethylsulfoxid | ad 1 I | ad 1 I | ad 1 I | ad 1 I |

The examples 1 to 4 (SL formulations) were prepared by mixing the components according to Table 1.

The effect of the herbicidal compositions according to the invention of the imidazolinone herbicide A and the adjuvant B and, if appropriate, herbicide safener compound C and/or further herbicide compound D on the growth of undesirable plants compared to the herbicidally active compounds alone was demonstrated by the following field experiments :
Seeds of sunflower (Helianthus annuus L.) where sown using small scale field experiment equipment. Test plants were uniform and homogeneous with respect to age, cultivar, and row spacing and distance in the row. Plot size 2,8 m x 10 m - 4 rows per plot.

Natural infestations of weeds where present in the test plots.

Postemergence treatments where performed at the 2-4 leaf stage (BBCH 12-14) of the test crop (Helianthus annuus L.) according to the BBCH-scale [Lancashire, P. D., H. Bleiholder, P. Langelüddecke, R. Stauss, T. van den Boom, E. Weber and A. Witzenberger, 1991: An uniform decimal code for growth stages of crops and weeds. Ann. appl. Biol. 119, 561-60].

The respectively stated components, herbicide compound A and adjuvant B and, optionally, herbicide safener compound C and/or further herbicide compound D where introduced into the spray medium used for applying the active composition. In the examples, the spray medium used was water.

The test period extended over 1 month to 4 months. During this time, the plants were tended, and their response to the individual treatments was evaluated.
The evaluation for the damage caused by the chemical compositions was carried out using a scale from 0 to 100%, compared to the untreated control plants. Here, 0 means no damage or normal course of growth of the weed or crop plants and 100 means complete destruction of the plants. Good herbicidal activity against weeds is given at values of at least 70, and very good herbicidal activity is given at values of at least 85.
Good selectivity to the crop plant is given at values below 10, whereas excellent crop selectivity is given at values below 5.

The plants used in the field experiments belonged to the following species:

| Scientific Name | Code |
|---|---|
| *Ambrosia elatior* | AMBEL |
| *Chenopodium album* | CHEAL |
| *Calestegia sepium* | CAGSE |
| *Datura strumarium* | DATST |
| *Digitaria sanguinalis* | DIGSA |
| *Echinochloa crus-galli* | ECHCG |

Table 2 shows improved efficacy of the herbicidal composition (Example 1 according to table 1) according to the invention in comparison to the commercial standard, Pulsar^{®} 40, a water soluble concentrate (SL) having an a.i. content of 40 g/l imazamox and Tween 20 as built-in adjuvant.

**Table 2: Efficacy comparison after post-emergence application of the composition according to the invention versus Pulsar^{®}40.**

| Herbicidal activity (%) with 40 g a.i.*/ha | | | | |
|---|---|---|---|---|
| weed | DAT* | Pulsar^{®}40 | Example 1 | increased efficacy in [%] |
| CHEAL | 17 | 69 | 93 | 34,8 |
| DIGSA | 47 | 70 | 92 | 31,4 |
| ECHCG | 28 | 57 | 95 | 66,7 |
| CAGSE | 24 | 72 | 89 | 23,6 |
| AMBEL | 31 | 65 | 90 | 38,5 |
| CHEAL | 31 | 40 | 100 | 150,0 |
| DATST | 31 | 70 | 100 | 42,9 |

| | | | | |
|---|---|---|---|---|
| *DAT: days after treatment *a.i.: imazamox | | | | |

Table 2 shows preserved crop tolerance after post-emergence application of the herbicidal composition (Example 1 according to table) according to the invention in comparison to the commercial standard, Pulsar^{®} 40, a water soluble concentrate (SL) having an a.i. content of 40 g/l imazamox and Tween 20 as built-in adjuvant.

**Table 3: Comparison of crop tolerance in sunflower after post-emergence application of the composition according to the invention versus Pulsar^{®}40.**

| Crop injury (%) with 40 g ai/ha | | | | |
|---|---|---|---|---|
| sunflower hybrid | tolerance type | DAT* | Pulsar^{®}40 | Example 1 |
| LN 11179 CL | CLHA-Plus | 8 | 0 | 2 |
| LN 11179 CL | CLHA-Plus | 14 | 0 | 0 |
| PARAISO 1001 | CLHA-Plus | 11 | 0 | 4 |
| PARAISO 1001 | CLHA-Plus | 32 | 0 | 0 |

| | | | | |
|---|---|---|---|---|
| *DAT: days after treatment *a.i.: imazamox | | | | |

## Claims

1. A method of controlling undesirable vegetation in cultures of crop plants, which comprises allowing a composition comprising:
a) a herbicide compound A, which is Imazamox; and
b) an adjuvant B, which is b2) an anionic surfactant selected from aliphatic monocarboxylates, aliphatic oligocarboxylates, sulfonamidocarboxylates, aliphatic or aromatic sulfates, polyethersulfates, amidopolyethersulfates, sulfated carboxylates, carbonic acid glycerides, or carbonic esters, aliphatic or aromatic sulfonates, sulfonated carboxylic esters or carboxylic amides, sulfosuccinic acid esters, polyethersulfonates, polyether phosphates or phosphate ester of polyalkoxylated fatty alcohol, polyether sulfate and polyalkoxylated derivatives of compounds of the formula R¹Xₙ, wherein the polyalkoxylate residue is terminated by a residue Y, and wherein R¹ is selected from aliphatic or aromatic residues having at least eight carbon atoms; X is selected from hydroxy, -O-(C₁-C₆-alkyl), -O-(C₃-C₆-alkenyl), amine, amide, or ester; n is 1, 2, 3, 4, 5, or 6; and Y is selected from carboxylate, sulfonate, sulfate, phosphate, or phosphonate; and wherein the weight ratio of the herbicide compound A and the adjuvant B is from 2:1 to 1:60;
to act on plants to be controlled or on their habitat, and where the crop plant is selected from
a) sunflowers containing an herbicide tolerance trait of (1) the CLHA-Plus trait, having an AHASL (acetohydroxyacid synthase large subunit) with an A122(*At*)T substitution, or (2) an AHASL variant thereof that contains both the A122(*At*)T substitution and a second substitution that can be one or more of P197Q, P197S, T203I, T203X, A205D, A205V, W574L, A653N, A653T, A653F, or A653V.
b) sunflowers containing two herbicide tolerance traits, both the CLHA-Plus trait (AHASL-A122(*At*)T) and a second AHASL trait, selected from an AHASL with an A205(*At*)V substitution or an AHASL with a P197(*At*)L substitution.

2. The method as claimed in claim 1, wherein the adjuvant B is a phosphate ester of polyalkoxylated fatty alcohol.

3. The method as claimed in claims 1 or 2, wherein the composition further comprises at least one further herbicide compound D.

4. The use of compositions comprising:
a) a herbicide compound A, which is Imazamox; and
b) an adjuvant B, which is b2) an anionic surfactant selected from aliphatic monocarboxylates, aliphatic oligocarboxylates, sulfonamidocarboxylates, aliphatic or aromatic sulfates, polyethersulfates, amidopolyethersulfates, sulfated carboxylates, carbonic acid glycerides, or carbonic esters, aliphatic or aromatic sulfonates, sulfonated carboxylic esters or carboxylic amides, sulfosuccinic acid esters, polyethersulfonates, polyether phosphates or phosphate ester of polyalkoxylated fatty alcohol, polyether sulfate and polyalkoxylated derivatives of compounds of the formula R¹Xₙ, wherein the polyalkoxylate residue is terminated by a residue Y, and wherein R¹ is selected from aliphatic or aromatic residues having at least eight carbon atoms; X is selected from hydroxy, -O-(C₁-C₆-alkyl), -O-(C₃-C₆-alkenyl), amine, amide, or ester; n is 1, 2, 3, 4, 5, or 6; and Y is selected from carboxylate, sulfonate, sulfate, phosphate, or phosphonate; and wherein the weight ratio of the herbicide compound A and the adjuvant B is from 2:1 to 1:60;
for controlling undesirable vegetation in cultures of crop plants, where the crop plant is selected from
a) sunflowers containing an herbicide tolerance trait of (1) the CLHA-Plus trait, having an AHASL (acetohydroxyacid synthase large subunit) with an A122(*At*)T substitution, or (2) an AHASL variant thereof that contains both the A122(*At*)T substitution and a second substitution that can be one or more of P197Q, P197S, T203I, T203X, A205D, A205V, W574L, A653N, A653T, A653F, or A653V.
b) sunflowers containing two herbicide tolerance traits, both the CLHA-Plus trait (AHASL-A122(*At*)T) and a second AHASL trait, selected from an AHASL with an A205(*At*)V substitution or an AHASL with a P197(*At*)L substitution.

5. The use as claimed in claim 4, wherein the adjuvant B is a phosphate ester of polyalkoxylated fatty alcohol.

## Patentansprüche

1. Verfahren zum Bekämpfen von unerwünschtem Pflanzenwuchs in Kulturpflanzenkulturen, bei dem man eine Zusammensetzung umfassend:
a) eine Herbizidverbindung A, bei der es sich um Imazamox handelt; und
b) ein Adjuvans B, bei dem es sich um b2) ein anionisches Tensid, ausgewählt aus aliphatischen Monocarboxylaten, aliphatischen Oligocarboxylaten, Sulfonamidocarboxylaten, aliphatischen oder aromatischen Sulfaten, Polyethersulfaten, Amidopolyethersulfaten, sulfatierten Carboxylaten, Kohlensäureglyceriden, oder Kohlensäureestern, aliphatischen oder aromatischen Sulfonaten, sulfonierten Carbonsäureestern oder Carbonsäureamiden, Sulfonbernsteinsäureestern, Polyethersulfonaten, Polyetherphosphaten oder Phosphatester von polyalkoxyliertem Fettalkohol, Polyethersulfat und polyalkoxylierten Derivaten von Verbindungen der Formel R¹Xₙ handelt, wobei der Polyalkoxylatrest von einem Rest Y terminiert ist, und wobei R¹ aus aliphatischen oder aromatischen Resten mit mindestens acht Kohlenstoffatomen ausgewählt ist; X aus Hydroxy, - O-(C₁-C₆-Alkyl), -O-(C₃-C₆-Alkenyl)amin, Amid oder Ester ausgewählt ist; n 1, 2, 3, 4, 5 oder 6 ist; und Y aus Carboxylat, Sulfonat, Sulfat, Phosphat oder Phosphonat ausgewählt ist;
und wobei das Gewichtsverhältnis der Herbizidverbindung A und des Adjuvans B 2:1 bis 1:60 beträgt;
auf zu bekämpfende Pflanzen oder ihren Lebensraum einwirken lässt, wobei die Kulturpflanze aus den folgenden ausgewählt ist:
a) Sonnenblumen, die ein Herbizidtoleranzmerkmal von (1) des CLHA-Plus-Merkmals, d.h.: ein AHASL mit einer A122(*At*)T-Substitution, oder (2) eine AHASL-Variante davon, die sowohl die A122(*At*)-Substitution und eine zweite Substitution, bei der es sich um eine oder mehrere von P197Q, P197S, T203I, T203X, A205D, A205V, W574L, A653N, A653T, A653F oder A653V
b) Sonnenblumen, die zwei Herbizidtoleranzmerkmale von) des CLHA-Plus-Merkmals, (AHASL-A122(*At*)T und ein zweites AHASL-Merkmal ausgewählt von einem AHASL mit einer A205(*At*)-V-Substitution oder einem AHASL mit einer P197(*At*)L-Substitution.

2. Verfahren nach Anspruch 1, wobei es sich bei dem Adjuvans B um einen Phosphatester eines polyalkoxylierten Fettalkohols handelt.

3. Verfahren nach den Ansprüchen 1 oder 2, wobei die Zusammensetzung weiterhin mindestens eine weitere Herbizidverbindung D umfasst.

4. Verwendung von Zusammensetzungen umfassend
a) eine Herbizidverbindung A, bei der es sich um Imazamox handelt; und
b) ein Adjuvans B, bei dem es sich um b2) ein anionisches Tensid, ausgewählt aus aliphatischen Monocarboxylaten, aliphatischen Oligocarboxylaten, Sulfonamidocarboxylaten, aliphatischen oder aromatischen Sulfaten, Polyethersulfaten, Amidopolyethersulfaten, sulfatierten Carboxylaten, Kohlensäureglyceriden, oder Kohlensäureestern, aliphatischen oder aromatischen Sulfonaten, sulfonierten Carbonsäureestern oder Carbonsäureamiden, Sulfonbernsteinsäureestern, Polyethersulfonaten, Polyetherphosphaten oder Phosphatester von polyalkoxyliertem Fettalkohol, Polyethersulfat und polyalkoxylierten Derivaten von Verbindungen der Formel R¹Xₙ handelt, wobei der Polyalkoxylatrest von einem Rest Y terminiert ist, und wobei R¹ aus aliphatischen oder aromatischen Resten mit mindestens acht Kohlenstoffatomen ausgewählt ist; X aus Hydroxy, - O-(C₁-C₆-Alkyl), -O-(C₃-C₆-Alkenyl)amin, Amid oder Ester ausgewählt ist; n 1, 2, 3, 4, 5 oder 6 ist; und Y aus Carboxylat, Sulfonat, Sulfat, Phosphat oder Phosphonat ausgewählt ist;
und wobei das Gewichtsverhältnis der Herbizidverbindung A und des Adjuvans B 2:1 bis 1:60 beträgt;
für die Bekämpfung von unerwünschten Pflanzenwuchs in Kulturpflanzenkulturen,
wobei die Kulturpflanze aus den folgenden ausgewählt ist:
a) Sonnenblumen, die ein Herbizidtoleranzmerkmal von (1) des CLHA-Plus-Merkmals, d.h.: ein AHASL mit einer A122(*At*)T-Substitution, oder (2) eine AHASL-Variante davon, die sowohl die A122(*At*)-Substitution und eine zweite Substitution, bei der es sich um eine oder mehrere von P197Q, P197S, T203I, T203X, A205D, A205V, W574L, A653N, A653T, A653F oder A653V
b) Sonnenblumen, die zwei Herbizidtoleranzmerkmale von) des CLHA-Plus-Merkmals, (AHASL-A122(*At*)T und ein zweites AHASL-Merkmal ausgewählt von einem AHASL mit einer A205(*At*)-V-Substitution oder einem AHASL mit einer P197(*At*)L-Substitution.

5. Verwendung nach Anspruch 4, wobei es sich bei dem Adjuvans B um einen Phosphatester eines polyalkoxylierten Fettalkohols handelt.

## Revendications

1. Méthode de contrôle de végétation indésirable dans des cultures de plantes cultivées, comprenant le fait de permettre à une composition comprenant :
a) un composé herbicide A, qui est l'imazamox ; et
b) un adjuvant B, qui est b2) un agent tensioactif anionique choisi parmi les monocarboxylates aliphatiques, les oligocarboxylates aliphatiques, les sulfonamidocarboxylates, les sulfates aliphatiques ou aromatiques, les polyéther sulfates, les amido-polyéther sulfates, les carboxylates sulfatés, les glycérides d'acide carbonique, ou les esters carboniques, les sulfonates aliphatiques ou aromatiques, les esters carboxyliques sulfonés ou les amides carboxyliques, les esters d'acide sulfosuccinique, les polyéther sulfonates, les polyéther phosphates ou l'ester de phosphate et d'alcool gras polyalcoxylé, le polyéther sulfate et les dérivés polyalcoxylés de composés de formule R¹Xₙ, où
le reste de polyalcoxylate est terminé par un reste Y, et où R¹ est choisi parmi des restes aliphatiques ou aromatiques ayant au moins huit atomes de carbone ; X est choisi parmi hydroxy, -O-(C₁-C₆-alkyle), -O-(C₃-C₆-alcényle), amine, amide, ou ester ; n vaut 1, 2, 3, 4, 5 ou 6 ; et Y est choisi parmi carboxylate, sulfonate, sulfate, phosphate ou phosphonate ; et où le rapport pondéral du composé herbicide A et de l'adjuvant B va de 2:1 à 1:60 ;
d'agir sur des plantes à contrôler ou sur leur habitat, et où la plante cultivée est choisie parmi :
a) des tournesols contenant un caractère de tolérance vis-à-vis d'un herbicide (1) du caractère CLHA-Plus, ayant une AHASL (grande sous-unité de l'acétohydroxyacide synthase) avec une substitution A122(A*t*)T, ou (2) d'un variant AHASL de celui-ci qui contient la substitution A122(At)T ainsi qu'une deuxième substitution pouvant être une ou plusieurs parmi P197Q, P197S, T203I, T203X, A205D, A205V, W574L, A653N, A653T, A653F ou A653V ;
b) des tournesols contenant deux caractères de tolérance vis-à-vis d'un herbicide, le caractère CLHA-Plus (AHASL-A122(A*t*)T) ainsi qu'un deuxième caractère AHASL, choisi parmi une AHASL ayant une substitution A205(At)V ou une AHASL ayant une substitution P197(A*t*)L.

2. Méthode selon la revendication 1, dans laquelle l'adjuvant B est un ester de phosphate et d'alcool gras polyalcoxylé.

3. Méthode selon les revendications 1 ou 2, dans laquelle la composition comprend en outre au moins un autre composé herbicide D.

4. Utilisation de compositions comprenant :
a) un composé herbicide A, qui est l'imazamox ; et
b) un adjuvant B, qui est b2) un agent tensioactif anionique choisi parmi les monocarboxylates aliphatiques, les oligocarboxylates aliphatiques, les sulfonamidocarboxylates, les sulfates aliphatiques ou aromatiques, les polyéther sulfates, les amido-polyéther sulfates, les carboxylates sulfatés, les glycérides d'acide carbonique, ou les esters carboniques, les sulfonates aliphatiques ou aromatiques, les esters carboxyliques sulfonés ou les amides carboxyliques, les esters d'acide sulfosuccinique, les polyéther sulfonates, les polyéther phosphates ou l'ester de phosphate et d'alcool gras polyalcoxylé, le polyéther sulfate et les dérivés polyalcoxylés de composés de formule R¹Xₙ, où
le reste de polyalcoxylate est terminé par un reste Y, et où R¹ est choisi parmi des restes aliphatiques ou aromatiques ayant au moins huit atomes de carbone ; X est choisi parmi hydroxy, -O-(C₁-C₆-alkyle), -O-(C₃-C₆-alcényle), amine, amide, ou ester ; n vaut 1, 2, 3, 4, 5 ou 6 ; et Y est choisi parmi carboxylate, sulfonate, sulfate, phosphate ou phosphonate ; et où le rapport pondéral du composé herbicide A et de l'adjuvant B va de 2:1 à 1:60 ;
pour le contrôle de végétation indésirable dans des cultures de plantes cultivées, où la plante cultivée est choisie parmi :
a) des tournesols contenant un caractère de tolérance vis-à-vis d'un herbicide (1) du caractère CLHA-Plus, ayant une AHASL (grande sous-unité de l'acétohydroxyacide synthase) avec une substitution A122(A*t*)T, ou (2) d'un variant AHASL de celui-ci qui contient la substitution A122(At)T ainsi qu'une deuxième substitution pouvant être une ou plusieurs parmi P197Q, P197S, T203I, T203X, A205D, A205V, W574L, A653N, A653T, A653F ou A653V ;
b) des tournesols contenant deux caractères de tolérance vis-à-vis d'un herbicide, le caractère CLHA-Plus (AHASL-A122(A*t*)T) ainsi qu'un deuxième caractère AHASL, choisi parmi une AHASL ayant une substitution A205(At)V ou une AHASL ayant une substitution P197(A*t*)L.

5. Utilisation selon la revendication 4, dans laquelle l'adjuvant B est un ester de phosphate et d'alcool gras polyalcoxylé.
